Europäisches Patentamt

European Patent Office

Office européen des brevets

(19)

(11) Veröffentlichungsnummer: **0 304 702**
**A1**

(12) **EUROPÄISCHE PATENTANMELDUNG**

(21) Anmeldenummer: **88112764.1**

(22) Anmeldetag: **05.08.88**

(51) Int. Cl.⁴: **B23B 51/00 , B21K 5/04**

(30) Priorität: **08.08.87 DE 8710882 U**
**26.04.88 JP 103358/88**

(43) Veröffentlichungstag der Anmeldung:
**01.03.89 Patentblatt 89/09**

(84) Benannte Vertragsstaaten:
**AT BE CH DE ES FR GB GR IT LI LU NL SE**

(71) Anmelder: **Adolf Würth GmbH & Co. KG**
**Maienweg 10**
**D-7118 Künzelsau(DE)**

(72) Erfinder: **Weidner, Karl**
**Worgberg 14**
**D-7118 Ingelfingen(DE)**
Erfinder: **Shinjo, Katsumi**
**1-22 3 chome, Matsu**
**Nishinariku, Osaka(JP)**

(74) Vertreter: **Patentanwälte RUFF, BEIER und**
**SCHÖNDORF**
**Neckarstrasse 50**
**D-7000 Stuttgart 1(DE)**

(54) **Bohrer.**

(57) Ein Bohrer enthält einen Bohrschaft (10) aus Vollmaterial, der in seinem vorderen Bereich eine kaltgeschmiedete Bohrspitze (11) mit zwei in Projektion etwa parallel zueinander verlaufenden Schneidkanten (12) und mit zwei etwa in Längsrichtung des Schafts (10) verlaufenden Spannuten (13) aufweist.

FIG. 1

EP 0 304 702 A1

## Bohrer

Die Erfindung betrifft einen Bohrer mit einem Bohrerschaft und einer Bohrschneide sowie ein Verfahren zu seiner Herstellung.

Bohrer zum Bohren von Metall sind üblicherweise Spiralbohrer. Diese besitzen eine Bohrspitze, die zwei gebogen geformte Bohrschneiden aufweist, vor denen Spannuten angeordnet sind. Die Spannuten erstrecken sich schraubenlinienförmig über einen großen Teil der Länge des Bohrerschaftes. Diese Spiralbohrer sind nur schwer herzustellen und müssen nach Herstellung geschliffen werden. Dabei werden sowohl die an der Spitze vorhandenen Hauptschneidkanten als auch die seitlichen Nebenschneidkanten geschliffen, die benachbart zu den Nuten liegen. Aufgrund der aufwendigen Herstellung sind Spiralbohrer teuer.

Seit kurzem werden in zunehmendem Maß in verschiedenen Industriebereichen Bleche eingesetzt, und selbst in den Bereichen, in denen die Benutzung von Blechen länger bekannt ist, nimmt das nachträgliche Bohren von insbesondere kleinen Löchern zu. Üblicherweise werden hierzu Spiralbohrer verwendet. Spiralbohrer lassen sich, wenn sie stumpf geworden sind, nachschleifen. Dies ist jedoch in der Regel nur in Werkstätten möglich. Bei Montagetrupps oder Handwerkern sind die Schleifgeräte nicht vorhanden.

Daher werden häufig die Spiralbohrer nicht mitgenommen und nachgeschliffen, sondern weggeworfen. Darüber hinaus brechen in rauhem Betrieb die kleinen Spiralbohrer auch häufig ab.

Der Erfindung liegt die Aufgabe zugrunde, einen Bohrer für Metall zu schaffen, der einen einfachen Aufbau besitzt und sich sehr preisgünstig herstellen läßt. Zur Lösung dieser Aufgabe schlägt die Erfindung einen Bohrer vor, der erfindungsgemäß eine kaltgeschmiedete Bohrspitze mit zwei in Projektion etwa parallel zueinander verlaufenden Schneidkanten und mit zwei etwa in Längsrichtung des Bohrers verlaufenden einander gegenüberliegenden Spannuten sowie einen massiven Schaft aufweist. Aufgrund der einfachen Herstellung der Bohrspitze durch Schmieden ist der Bohrer sehr preisgünstig herzustellen. Es braucht zu seiner Herstellung praktisch nur der Schaft in seinem vorderen Bereich in einem Arbeitsgang mit Hilfe einer Form geschmiedet zu werden, wodurch die Bohrspitze entsteht.

Derartige Bohrspitzen sind bei Bohrschrauben bekannt. Bei Bohrschrauben bestehen jedoch andere Probleme als bei Bohrern. Bohrschrauben sind nämlich nur zur einmaligen Verwendung bestimmt, während Bohrer eine möglichst lange Standzeit haben sollen. Darüberhinaus spielt bei Bohrschrauben die Exaktheit des Bohrloches keine Rolle, da das Loch anschließend in einem Gewindeformvorgang sowieso verformt wird. Es hat sich nun überraschenderweise herausgestellt, daß die bei selbstbohrenden Schrauben bekannten Schneidspitzen sich auch als Bohrer eignen.

In Weiterbildung kann vorgesehen sein, daß die Querabmessung der Bohrspitze in einer Richtung parallel zu den Schneidkanten größer ist als die Querabmessung in einer Richtung senkrecht hierzu. Auf diese Weise wird eine Reibung an der Bohrlochwand möglichst niedrig gehalten.

In Weiterbildung kann vorgesehen sein, daß die maximale Querabmessung der Bohrspitze größer ist als der Durchmesser des Bohrerschaftes. Diese Maßnahme ist bei Spiralbohrern nicht bekannt, da Spiralbohrer eine benachbart zu den Spannuten verlaufende Phase aufweisen, die zu einer allseitigen Anlage am Bohrloch führen.

Besonders günstig ist es, wenn der Querschnitt durch die Bohrspitze die Form zweier seitlich versetzter spiegelverkehrter Trapeze aufweist, deren längere Seiten die Schneidkanten bilden. Eine derartige Schneidspitze bei einer selbstbohrenden Schraube aus DE-PS 31 26 355 bekannt. Diese Schneidspitze eignet sich besonders für den von der Erfindung vorgeschlagenen Bohrer.

In Weiterbildung kann vorgesehen sein, daß die von den Spannuten gebildeten Nebenschneidkanten parallel zu der Längsachse des Bohrerschafts verlaufen. Besonders günstig ist es, wenn die vor den Schneidkanten liegenden Nutflächen ausgehöhlt verlaufen.

Die Erfindung schlägt zum Herstellen des Bohrers vor, daß ein zylindrischer Schaft, vorzugsweise aus einem Stahl mit niedrigem Kohlenstoffanteil, in seinem einen Endbereich zur Bildung einer Bohrspitze kalt geschmiedet wird. Dies kann insbesondere mit Hilfe einer geteilten Form geschehen. Dabei ist es auch möglich, daß der Schaft in seinem Einspannbereich oder in seinem mittleren Bereich einen verdickten Flansch aufweist, der bei der Herstellung gerändelt wird, wobei beim Durchführen der Rändelung gleichzeitig die beim Schmieden der Bohrspitze entstandenen Grate entfernt werden.

Weitere Merkmale, Einzelheiten und Vorzüge der Erfindung ergeben sich aus der folgenden Beschreibung einer bevorzugten Ausführungsform der Erfindung sowie anhand der Zeichnung. Hierbei zeigen:

Fig. 1 eine Seitenansicht eines von der Erfindung vorgeschlagenen Bohrers;

Fig. 2 in vergrößertem Maßstab eine Seitenansicht der Bohrspitze;

Fig. 3 eine Aufsicht auf den Bohrer von links in Fig. 1 und 2.

Fig. 4 eine Ansicht einer Form zur Herstellung eines Bohrers.

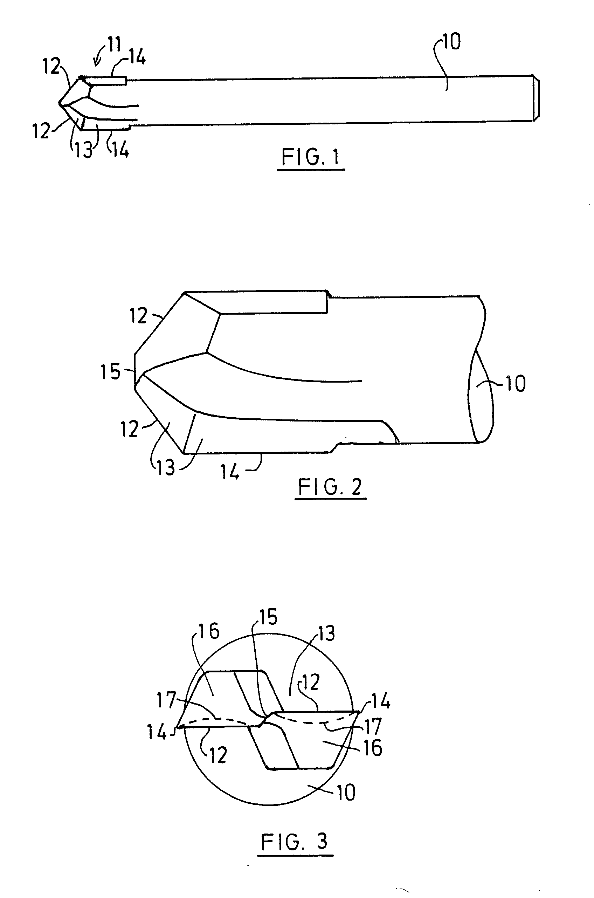

Der in Fig. 1 dargestellte Bohrer enthält einen Bohrerschaft 10, der an seinem vorderen Ende mit einer Bohrspitze 11 versehen ist. Die Bohrspitze 11 weist eine geringe axiale Länge auf, die derart bemessen ist, daß sie etwas größer ist als die Dicke des zu durchbohrenden Materials. Die Breite, d.h. die Quererstreckung der Bohrspitze ist etwas größer als der Durchmesser des Bohrerschaftes 10. Der Bohrerschaft 10 ist mit Ausnahme der Bohrspitze 11 vollständig massiv ausgebildet, d. h. er besitzt keine Spannuten.

Die Bohrspitze 11 weist zwei Hauptschneidkanten 12 auf, die von der Seite gesehen, wie dies in Fig. 1 dargestellt ist, einen spitzen Winkel von etwa 105° einschließen. In Drehrichtung vor jeder Hauptschneidkante 12 ist je eine Spannut 13 vorhanden, von denen in Fig. 1 nur eine zu sehen ist. Die Spannut 13 verläuft etwa in Längsrichtung des Bohrerschaftes 10. Ihre radiale Außenkante bildet jeweils eine Nebenschneidkante 14, die sich an die Hauptschneidkante 12 anschließen.

Einzelheiten der Bohrspitze gehen aus Fig. 2 deutlicher hervor. Die Spannuten 13 verlaufen benachbart zu den Hauptschneidkanten zunächst etwas schräg und gehen anschließend in eine rein axiale Richtung über. Zwischen den beiden Hauptschneidkanten 12 kann eine aus Fig. 2 hervorgehenden Meißelspitze 15 gebildet sein.

Die spezielle Form der Bohrspitze wird weiterhin durch Fig. 3 erläutert, die eine Aufsicht auf die Bohrspitze zeigt. Die Querschnittsform ist durch zwei Trapeze 16 gebildet, die bzgl. ihrer längeren Seiten spiegelbildlich angeordnet und seitlich versetzt sind.

Die jeweils längeren Seiten der Trapeze bilden die Hauptschneidkanten 12. Beide Hauptschneidkanten 12 verlaufen gradlinig und in der Projektion der Fig. 3 parallel zueinander, wobei sie gegenseitig etwas versetzt sind. Die Nutflächen 17, die die Spannuten 13 einseitig begrenzen, verlaufen etwas ausgehöhlt, wobei die Höhlungsachse in Längsrichtung des Bohrschaftes 10 verläuft.

Der Abstand der beiden Nebenschneidkanten 14 voneinander, d. h. die maximale Quererstreckung der Bohrspitze 11 ist etwas größer als der Durchmesser des Bohrschaftes 10. Aufgrund dieser Tatsache und der Trapezform der Querschnitts der Bohrspitze wird eine Reibung am Rand des Bohrlochs verhindert.

Der von der Erfindung vorgeschlagene Bohrer ist beispielsweise dazu bestimmt, die Löcher für Blindnietverbindungen herzustellen. Hier wird ein robuster, billiger Bohrer verlangt. Es hat sich herausgestellt, daß die durch Kaltschmieden hergestellte Bohrspitze für mindestens 200 - 300 Bohrungen verwendbar ist.

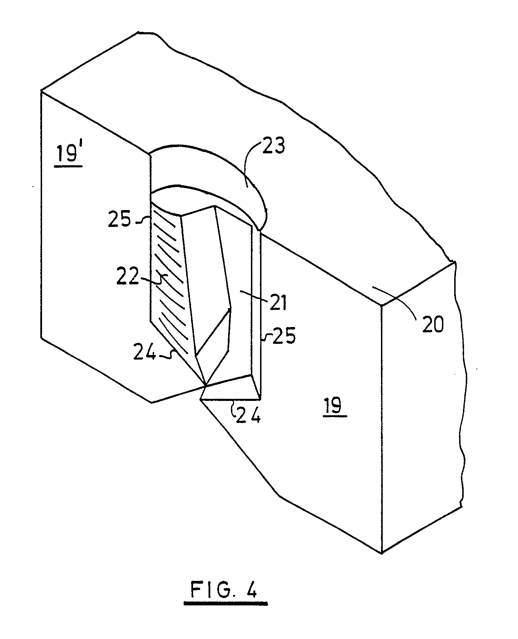

Fig. 4 zeigt einen Teil einer geteilten Form zur Herstellung der Bohrspitze. Diese Form besteht aus zwei symmetrisch konstruierten Formteilen 20, von denen in Fig. 1 nur eine dargestellt ist. Das Formteil 20 besitzt zwei Schneidflächen 19 und 19', die parallel zueinander verlaufen, von denen jedoch die Schneidfläche 19' in Bezug auf die Schneidfläche 19 geringfügig zurückgesetzt ist. Wie sich aus Fig. 4 ergibt, besitzt die Formhälfte 20 einen Formhohlraum, in dem eine Erhebung 22 sowie Vertiefungen 21 und 23 vorgesehen sind. Die Vertiefung 21 ist konkav in Bezug auf die Ebene der Schneidfläche 19. Die Erhebung 22 ist in Bezug auf die Schneidfläche 19' konvex ausgebildet. Die Schneidkante 12 und die Schneidkante 14 werden durch Kanten 24 und 25 geformt, die die Öffnung des Formhohlraums bilden. Die Kanten 24 und 25 sind dabei auf den Schneidflächen 19 und 19' vorgesehen. Eine halbkreisförmige Ausnehmung 23 ist so hergestellt, daß sie den ursprünglichen zylindrischen Schaft 10 haltert, wenn dieser in der Form einer Kompressionskraft ausgesetzt wird.

## Ansprüche

1. Bohrer mit einem Bohrerschaft (10) und einer Bohrschneide, dadurch gekennzeichnet, daß er eine kaltgeschmiedete Spitze (11) mit zwei in Projektion etwa parallel zueinander verlaufenden Schneidkanten (12) und mit zwei in etwa in Längsrichtung des Bohrers verlaufenden, aneinander gegenüberliegenden Spannuten (13) sowie einen massiven Schaft (10) aufweist.

Bohrer nach Anspruch 1, dadurch gekennzeichnet, daß die Querabmessung der Bohrspitze (11) in einer Richtung parallel zu den Schneidkanten (12) größer ist als die Querabmessung in einer Richtung senkrecht hierzu.

3. Bohrer nach Anspruch 1 oder 2, dadurch gekennzeichnet, daß die maximale Querabmessung der Bohrspitze (11) größer ist als der Durchmesser des Bohrerschaftes (10).

4. Bohrer nach einem der vorhergehenden Ansprüche, dadurch gekennzeichnet, daß der Querschnitt durch die Bohrspitze (11) die Form zweier seitlich versetzter spiegelverkehrter Trapeze (16) aufweist, deren längere Seiten die Schneidkanten (12) bilden.

5. Bohrer nach einem der vorhergehenden Ansprüche, dadurch gekennzeichnet, daß die von den Spannuten (13) gebildeten Nebenschneidkanten (14) parallel zur Längsachse des Bohrerschaftes (10) verlaufen.

6. Bohrer nach einem der vorhergehenden Ansprüche, dadurch gekennzeichnet, daß die vor den Schneidkanten (12) liegenden Nutflächen (17) ausgehöhlt verlaufen.

7. Verfahren zur Herstellung eines Bohrers, dadurch gekennzeichnet, daß ein zylindrischer Schaft (10) vorzugsweise aus einem Stahl mit niedrigem Kohlenstoffanteil in seinem einen Endbereich zur Bildung einer Bohrspitze (11) kalt geschmiedet wird, insbesondere mit Hilfe einer geteilten Form.

8. Verfahren zur Herstellung eines Bohrers, dadurch gekennzeichnet, daß der Schaft (10) in seinem oberen oder mittleren Bereich einen Flansch aufweist, der gerändelt wird, wobei gleichzeitig die beim Schmieden entstandenen Grate entfernt werden.

9. Verfahren zur Herstellung eines Bohrers nach Anspruch 7 oder 8 dadurch gekennzeichnet, daß mit dem Walzen der Rändelung der Flansch angewalzt wird.

10. Verfahren nach einem der Ansprüche 7 - 9, dadurch gekennzeichnet, daß ein Bohrer nach einem der Ansprüche 1 - 6 geschmiedet wird.

FIG. 1

FIG. 2

FIG. 3

FIG. 4

Europäisches Patentamt

**EUROPÄISCHER RECHERCHENBERICHT**

Nummer der Anmeldung

EP 88 11 2764

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A- 912 392 (NOURRISSON et al.) <br> * gesamte Dokument * <br> --- | 1,5,7,10 | B 23 B 51/00 <br> B 21 K 5/04 |
| D,Y | DE-C-3 126 355 (YUGEN KAISHA) <br> * Anspruch; Spalte 4, Zeile 62 - Spalte 5, Zeile 49; Figuren 1-5 * | 1,5,7,10 | |
| D,A | | 2-4,6 | |
| A | DE-A-2 244 159 (TUCKER EYELET) <br> * Ansprüche 1-4 * <br> --- | 1,7,8 | |
| A | FR-A-2 299 941 (GKN SCREWS & FASTENERS) <br> * Ansprüche 1,3; Figur 4 * <br> --- | 1 | |
| A | GB-A-2 025 810 (ILLINOIS TOOL WORKS) <br> * Ansprüche D,F; Figuren 1-4 * <br> --- | 1,7 | |
| P,X | DE-U-8 710 882 (WUERTH) <br> * gesamte Dokument * <br> ----- | 1-6 | |

**RECHERCHIERTE SACHGEBIETE (Int. Cl.4)**

B 21 K 5/00
B 23 B 51/00
B 23 P 15/32
F 16 B 25/00

Der vorliegende Recherchenbericht wurde für alle Patentansprüche erstellt

| Recherchenort | Abschlußdatum der Recherche | Prüfer |
|---|---|---|
| BERLIN | 24-11-1988 | MARTIN A E W |